# EUROPÄISCHE PATENTSCHRIFT

(11) **EP 1 400 470 B1**
(45) Veröffentlichungstag und Bekanntmachung des Hinweises auf die Patenterteilung: **10.08.2005**
(21) Anmeldenummer: 02020808.8
(22) Anmeldetag: 17.09.2002
(51) Int. Cl.: B65G 47/82, B65G 47/53, B65H 5/16

(54) **Vorrichtung und Verfahren zum Umlenken transportierter Platten mit einem Querschieber**
Device and method for transferrring conveyed boards with a pusher
Dispositif et méthode pour dévier des plaques transportées avec un poussoir

(43) Veröffentlichungstag der Anmeldung: 24.03.2004
(73) Patentinhaber: SHS Siempelkamp Handling Systeme GmbH & Co, 82503 Wolfratshausen (DE)
(72) Erfinder:
(74) Vertreter: Szynka, Dirk, Dr.

(56) Entgegenhaltungen:
- DE-U- 29 723 395
- US-A- 3 463 295

## Beschreibung

Die vorliegende Erfindung bezieht sich auf einen Transporttisch für Platten, der zum Umlenken der transportierten Platten von einer Richtung in eine andere Richtung dient. Solche Transporttische werden gelegentlich auch als Winkelstation bezeichnet.

Insbesondere richtet sich die Erfindung dabei auf beschichtete und unbeschichtete Span-, OSB-, MDF- und andere Faserplatten, Gipsplatten, Mineralplatten und ganz allgemein auf Platten aus Holz, Kunststoff, Metall und daraus zusammengesetzten Materialien und besonders auf Platten mit einer Stärke von 1 - 40 mm.

Bei der Herstellung und Verarbeitung von Platten werden diese üblicherweise auf Transportbahnen zwischen verschiedenen Bearbeitungsstationen bewegt. Dabei ist es häufig notwendig, die Platten aus einer Transportrichtung, die im folgenden als "X-Richtung" bezeichnet wird, in eine andere, im folgenden als "Y-Richtung" bezeichnete Richtung umzulenken. Dabei kann es sich um eine reine Richtungsänderung handeln oder aber auch um einen Auswahlvorgang, bei dem nur einige der Platten umgelenkt werden oder verschiedene Platten in verschiedene Richtungen umgelenkt werden. Im Folgenden wird der Einfachheit halber davon ausgegangen, dass sämtliche Platten ihre Transportrichtung ändern, wobei die Erfindung jedoch nicht hierauf eingeschränkt ist.

Bei diesbezüglichen Transportanlagen und insbesondere Transporttischen ist man allgemein bestrebt, einen einfachen zuverlässigen Aufbau einerseits mit einer möglichst hohen Durchsatzrate bzw. Transportgeschwindigkeit andererseits zu kombinieren.

Im Besonderen sind im Stand der Technik Transporttische für Stückgut bekannt geworden, die einen Querschieber aufweisen, der das Stückgut auf dem Transporttisch in die Y-Richtung beschleunigt. Ein Beispiel findet sich in der WO98/49083. Gemäß diesem Stand der Technik soll zugunsten hoher Transportleistungen und zur Vermeidung eines zu großen Abstandes zwischen aufeinander folgenden Stücken der Querschieber mitlaufend mit der Bewegung der Stücke in der X-Richtung bewegt werden.

Der vorliegenden Erfindung liegt das technische Problem zugrunde, einen Transporttisch der beschriebenen Art anzugeben, der in technisch nicht zu aufwändiger Weise einen hohen Transportdurchsatz ermöglicht.

Hierzu richtet sich die Erfindung auf einen Transporttisch zum Umlenken transportierter Platten gemäß Anspruch 1.

Ferner richtet sich die Erfindung auf ein entsprechendes Arbeitsverfahren gemäß Anspruch 12.

Im Unterschied zu dem beschriebenen Stand der Technik kommt es bei dieser Erfindung in der senkrechten Projektion, also in der Blickrichtung einer auf der X-Richtung und der Y-Richtung senkrecht stehenden Z-Richtung, zu einer Überlappung aufeinanderfolgender transportierter Platten. Dies wird ermöglicht, indem die Platten im Bereich des Transporttischs von einer Einfahrtransportebene in eine Schiebertransportebene, in der sich der bereits erwähnte Querschieber bewegen kann, abgesenkt werden. Daher können nachfolgende Platten in der Einfahrtransportebene teilweise über den davor transportierten Platten bewegt werden, weil letztere auf einer tiefer liegenden Transportebene transportiert werden. Der Querschieber behindert damit das Einfahren der nachfolgenden Platten nicht und kann davor transportierte Platten mit einer Überlappung zu den nachfolgenden Platten in der Y-Richtung beschleunigen und ausfahren.

Dabei kann die Y-Richtung senkrecht zu der X-Richtung liegen, dies ist jedoch nicht notwendig. Wenn vorstehend von "quer" die Rede war, so ist damit gemeint, dass die X-Richtung und die Y-Richtung einen eindeutig von 0° bzw. 180° verschiedenen Winkel bilden, der jedoch nicht notwendigerweise 90° betragen muss. Insbesondere umfasst die vorliegende Erfindung auch die Möglichkeit einer schrägen Bewegungsrichtung des Querschiebers, wie dies im zitierten Stand der Technik dargestellt ist. Mit der vorliegenden Erfindung kann diese Querorientierung jedoch auch vermieden werden, ohne die gemäß dem zitierten Stand der Technik dann eintretenden Nachteile eines notwendigerweise entsprechend großen Abstandes zwischen aufeinander folgend transportierten Platten in Kauf nehmen zu müssen.

Eine Weiterbildung der Erfindung sieht vor, dass der Querschieber über seine Funktion, die Platten in der Y-Richtung zu beschleunigen, hinaus eine Oberseite aufweist, die als Gleitkante für einfahrende Platten dienen kann. Damit werden die einfahrenden Platten nicht nur in einer höheren Einfahrtransportebene eingefahren, sondern können dabei über den in der Schiebertransportebene wirkenden Querschieber gleiten, sich also auch auf diesem abstützen. Durch entsprechende Formgebung und Materialwahl auf der Oberseite des Querschiebers können abgestimmt auf das Plattenmaterial Schäden vermieden werden.

Ferner kann in Transportrichtung vor dem durch den Querschieber erfassten Fahrbereich ein hier als "X-Rollenwerk" bezeichnetes Rollenwerk vorgesehen sein. Dieses X-Rollenwerk fasst ankommende Platten zwischen zwei in Z-Richtung übereinanderliegende Rollen und verzögert diese während des Einfahrens in den Fahrbereich des Querschiebers. Ein solches X-Rollenwerk hat ferner den Vorteil, die ankommenden Platten zwar in X-Richtung beweglich, jedoch in Y-Richtung fest zu halten und dadurch eine unbeabsichtigte Verschiebung der Platten durch den Querschieber zu verhindern. Während der Querschieber in Transportrichtung voran laufende Platten aus dem Transporttisch herausfährt, kann es sonst zu einem nachteiligen Verrutschen nachfolgender Platten kommen. Das X-Rollenwerk kann auch ausschließlich auf diese Funktion gerichtet sein, muss also nicht notwendigerweise eine Verzögerungswirkung haben; es ist auch an sich optional.

Weiterhin kann ein hier als "Y-Rollenwerk" bezeichnetes Rollenwerk in Transportrichtung hinter dem Fahrbereich des Querschiebers vorgesehen sein, also in Y-Richtung hinter dem Fahrbereich. Dieses Rollenwerk kann von dem Querschieber bereits (teil-) beschleunigte Platten greifen, optional weiter beschleunigen oder auch nur die Ausfahrbewegung unterstützen. Insbesondere kann mit Hilfe eines solchen Y-Rollenwerks bei Bedarf vermieden werden, dass der Fahrbereich des Querschiebers die gesamte Breite der Platten in Y-Richtung überdecken muss. Vielmehr kann mit dem Querschieber dafür gesorgt werden, dass das Rollenwerk die Platten an deren in Y-Richtung vorderer Kante greift, woraufhin das Y-Rollenwerk für die Ausfahrbewegung sorgt.

Schließlich kann optional auch ein hier als "X-Anschlag" bezeichneter Anschlag vorgesehen sein, gegen den einfahrende Platten laufen können und der zum einen für eine elastische (Rest-) Abbremsung und zum anderen für eine zumindest ungefähre Lagepositionierung in X-Richtung sorgen kann. Dabei kann der Transporttisch so ausgelegt sein, dass der X-Anschlag als Sicherheitseinrichtung dient, also im Normalfall nicht oder kaum von Platten berührt wird. Er kann jedoch auch als reguläres Element in den Verzögerungsvorgang eingebunden sein. Er setzt nicht notwendigerweise das bereits beschriebene X-Rollenwerk voraus. Vorzugsweise ist der X-Anschlag in der X-Richtung einstellbar, um an verschiedene Plattenformate angepasst werden zu können.

Vorzugsweise laufen die Platten in der X-Richtung zunächst ganz in den Fahrbereich des Querschiebers ein, bevor der Querschieber mit der Beschleunigung in Y-Richtung beginnt. Dabei sind die Platten vorzugsweise in X-Richtung bereits ganz zum Stillstand gekommen, bevor in Y-Richtung mit der Beschleunigung begonnen wird. Natürlich ist die Erfindung aber auch realisierbar mit einer Restbewegung in X-Richtung, während der Querschieber bereits in Y-Richtung beschleunigt. Auch kann der Querschieber seine Funktion bereits ausüben, während die Platte noch nicht vollständig in den Fahrbereich eingefahren worden ist.

Der Querschieber kann eine linealartige Leiste sein, die über eine Linearführung geführt und einen Riemenantrieb angetrieben ist. Es wird auf das Ausführungsbeispiel verwiesen.

Ferner kann optional eine heb- und senkbare Gleitleiste vorgesehen sein, auf deren Oberseite die einfahrenden Platten gleiten können. Diese Gleitleiste kann dabei abgesenkt werden, um eine Y-Bewegung von Platten nicht zu stören, jedoch angehoben werden, wenn eine in Y-Richtung hintere Kante einer ausfahrenden Platte über sie hinweg transportiert wurde, um einer nachfolgenden Platte eine Unterstützung auf dem Niveau der Einfahrtransportebene zu bieten. Damit kann die Funktion der Gleitkante der Querschieberoberseite - sofern diese vorgesehen ist - unterstützt werden und insbesondere verhindert werden, dass eine in Y-Richtung hintere Kante einer ausfahrenden Platte und eine in Y-Richtung vordere Kante einer einfahrenden oder gerade einfahrenden Platte direkt übereinander rutschen und sich gegenseitig beschädigen. Die Gleitleiste kann beispielsweise mit einem Hebemechanismus geführt und über einen Pneumatikzylinder angetrieben sein. Auch hierzu wird auf das Ausführungsbeispiel verwiesen.

Dieses im Folgenden näher dargestellte Ausführungsbeispiel ist in den beiliegenden Figuren gezeigt, wobei die einzelnen Merkmale auch in anderen als den dargestellten Kombinationen erfindungswesentlich sei können. Insbesondere wird ausdrücklich darauf hingewiesen, dass die vorstehende und die nachfolgende Beschreibung nicht ausdrücklich zwischen Vorrichtungsmerkmalen und Verfahrensmerkmalen unterscheiden, sondern sämtliche technische Merkmale im Hinblick auf beide Kategorien zu verstehen und als offenbart anzusehen sind.
- Fig. 1: zeigt eine schematische Draufsicht auf einen erfindungsgemäßen Transporttisch.
- Fig. 2: zeigt eine schematische Schnittansicht durch den Transporttisch aus Fig. 1.

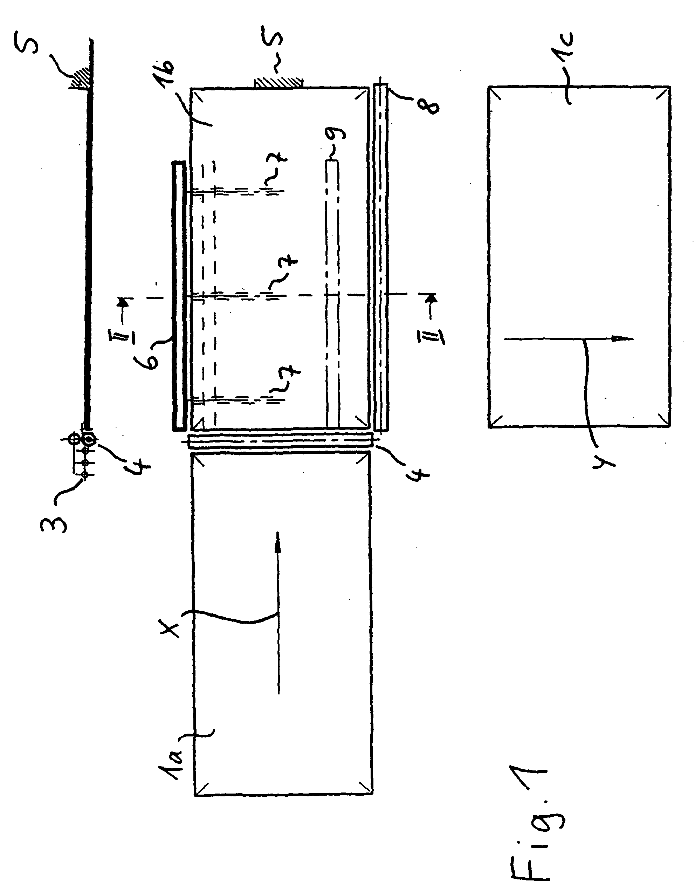

Fig. 1 zeigt eine schematische Draufsicht auf den Transporttisch. Platten 1 können von der linken Seite in einer in Fig. 1 horizontal liegenden X-Richtung einfahren und in einer in Fig. 1 vertikal liegenden Y-Richtung (in Fig. 1 nach unten) ausfahren. Im oberen rechten Bereich der Fig. 1 ist eine schematische Schnittansicht entlang einer X-Schnittrichtung eingezeichnet, die verdeutlicht, dass vor dem eigentlichen Transporttisch 2 eine von links in X-Richtung verlaufende Rollentransportbahn 3 angeordnet ist. Über diese Rollentransportbahn 3 werden Platten, wie die in Fig. 1 mit 1a bezeichnete Platte, zu dem Transporttisch 2 herangefahren und dort von einem direkt vor dem Transporttisch 2 angeordneten X-Rollenwerk 4 erfasst. Die Drehachsen der vertikal übereinander liegenden Rollen des Rollenwerks 4 liegen dabei parallel zur Y-Richtung.

Mit dem X-Rollenwerk 4 kann eine Platte 1 dann in zunehmend verzögerter Weise dem Transporttisch 2 zugeführt werden, bis sie an einem in X-Richtung elastisch nachgebenden Anschlag 5 anstößt. Dieser Anschlag 5 nimmt keine großen Kräfte mehr auf, vielmehr sind die Platten 1 vor dem Kontakt mit dem Anschlag 5 fast vollständig abgebremst. Er dient lediglich als Sicherheitsanschlag. Er kann auch zur Lagepositionierung auf eine durch ihn verkörperte Y-Festkante dienen. Der X-Anschlag 5 kann im übrigen entlang der X-Richtung verstellbar sein, so dass der Transporttisch 2 auf verschiedene Formate der Platten 1 eingestellt werden kann.

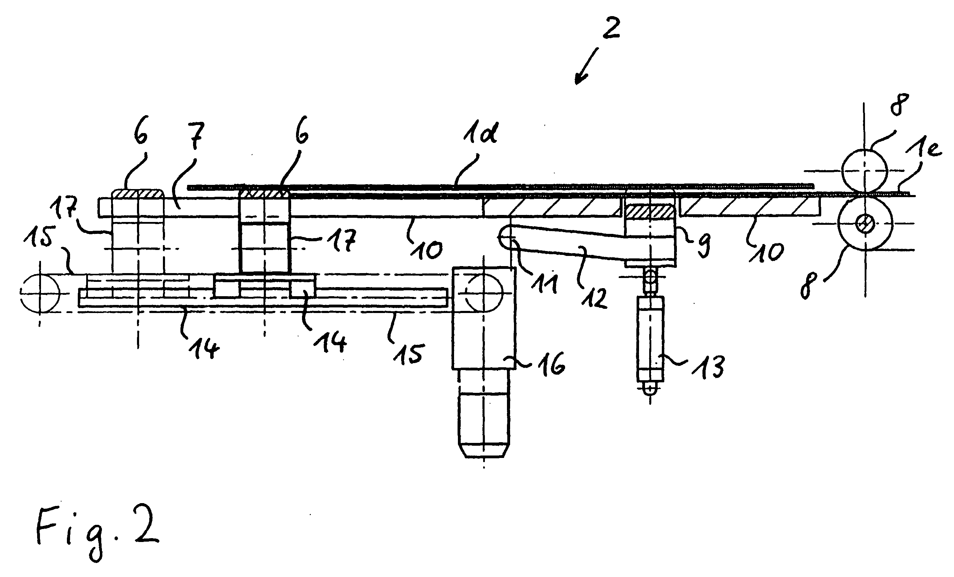

In Fig. 1 ist eine an dem Anschlag 5 anliegende Platte mit 1b bezeichnet. Die Platte 1b hat das X-Rollenwerk 4 gerade verlassen. In direkter Nachbarschaft zu der in Y-Richtung hinteren Kante der Platte 1b ist ein Querschieber 6 angeordnet, dessen genauer Aufbau anhand von Fig. 2 noch näher erläutert wird. Der Querschieber 6 ist über einen mit 7 bezeichneten Strichen entsprechenden Fahrbereich (mit 7 sind Schlitze für Halterungen des Querschiebers 6 bezeichnet, die anhand Fig. 2 näher erläutert werden) in Y-Richtung verfahrbar, und zwar bei diesem Beispiel etwa bis zu der Mitte der Breite der Platte 1b in Y-Richtung. Damit kann der Schieber die Platte 1b einem direkt vor ihrer in Y-Richtung vorderen Kante angeordneten Y-Rollenwerk 8 zuführen, das dem bereits erwähnten X-Rollenwerk 4 baulich entspricht, wobei jedoch die Achsen parallel zur X-Richtung liegen. Die Platte 1b wird dann von dem Y-Rollenwerk 8 erfasst und weiterhin in Y-Richtung beschleunigt. Wenn die Platte etwa zur Hälfte durch das Y-Rollenwerk 8 hindurch gelaufen ist, hat sie den Fahrbereich des Querschiebers 6 verlassen, so dass das Ausfahren im Folgenden durch das Y-Rollenwerk 8 und - optional - weitere Transporteinrichtungen in Y-Richtung stromabwärts von dem Y-Rollenwerk 8 erfolgen kann. Solche Transporteinrichtungen können eine weitere Rollenbahn sein, die in der Figur nicht im Einzelnen dargestellt ist. Jedenfalls läuft die auf das Y-Rollenwerk 8 und den Transporttisch 2 folgende Transportbahn in Y-Richtung, d.h. in Fig. 1 nach unten, von dem Transporttisch 2 weg. In diesem Beispiel dient der Transporttisch 2 also als 90°-Winkelstation. Die in Fig. 1 dargestellte Platte 1c hat als Beispiel das Y-Rollenwerk 8 bereits verlassen und fährt auf der Y-Transportbahn weiter. Sie bleibt dabei auf die durch den X-Anschlag 5 vorgegebene Referenzkante entlang der Y-Richtung ausgerichtet.

Sobald die durch das Y-Rollenwerk 8 transportierte Platte 1 eine in Fig. 1 in unterbrochenen Linien angedeutete Gleitleiste 9 überfahren hat, wird diese in noch näher zu erläuternder Weise angehoben, so dass eine nachfolgende Platte 1 a auf der Oberseite der Gleitleiste 9 und zusätzlich auf der Oberseite des noch in der Rückbewegung befindlichen Querschiebers 6 gleiten kann. Damit wird verhindert, dass die in Fig. 1 untere, also in Y-Richtung vordere Kante der nachfolgenden Platte 1a über die in Y-Richtung hintere, also in Fig. 1 obere Kante der vorauseilenden Platte abrutscht und es dabei zu Schäden an den Kanten kommt. Die nachfolgende Platte 1 a kann jedoch mit dem Einfahren durch das X-Rollenwerk 4 bereits beginnen, wenn die vorauseilende Platte 1b in die Schiebertransportebene abgesenkt worden ist (vgl. nachfolgende Erläuterung zu Fig. 2). In einer Anfangsphase des Einfahrens wird die nachfolgende Platte 1a nämlich von dem X-Rollenwerk 4 gehalten, im Weiteren gleitet sie dann zusätzlich über die Oberseite des in dem erwähnten Fahrbereich verfahrenen Querschiebers 6 und schließlich, wie erläutert, über die Gleitleiste 9. Die Platten können also mit einer erheblichen Überlappung zwischen der in Fig. 1 unteren rechten Ecke der nachfolgenden Platten und oberen linken Ecke der vorauseilenden Platten durch den Transporttisch 2 gefahren werden. Damit kann der Abstand zwischen den Platten während des Transports minimal gehalten werden. Dabei verhindert das X-Rollenwerk 4, während es eine Platte, hier die Platte 1a, hält, dass es durch die überlappende Betriebsweise des Transporttischs zu einer Störung der Ausrichtung der nachfolgenden Platte 1a kommt. Das X-Rollenwerk 4 hat also neben der Verzögerungswirkung eine Y-Stabilisierungswirkung.

Die in Fig. 1 eingezeichnete Schnittlinie II-II verdeutlicht die Perspektive der schematisierten Schnittansicht aus Fig. 2. Dort liegt also die X-Richtung senkrecht zur Zeichenebene und die Y-Richtung horizontal darin (nach rechts weisend). Man erkennt, dass der Transporttisch 2 eine eigentliche Tischfläche 10 mit Ausnehmungen für die Gleitleiste 9 und Halterungen des Querschiebers 6 aufweist. Rechts in Fig. 2 ist das Y-Rollenwerk 8 eingezeichnet. Ferner sind eine in der Querschiebertransportebene liegende Platte 1e und eine darüber in der Einfahrtransportebene liegende Platte 1d dargestellt. Die Platte 1d wird in der dargestellten Situation noch von dem nicht eingezeichneten X-Rollenwerk 4 gehalten und gleitet im Übrigen auf der oberen Gleitkante des Querschiebers 6. Dabei kann es sich um eine Kunststofflage auf der Oberseite des Querschiebers 6 mit abgerundeten Kanten handeln. Der Kunststoff ist so ausgewählt, dass er einen geringen Reibungskoeffizienten mit dem verwendeten Plattenmaterial aufweist und keine Spuren hinterlässt.

Die Platte 1e ist die voraus laufende Platte und bereits in die tiefer liegende Querschieber-Transportebene abgesenkt, so dass sie von dem Querschieber 6 in der Y-Richtung, d.h. in Fig. 2 nach rechts, aus dem Bereich des Transporttischs 2 und durch das Y-Rollenwerk 8 ausgefahren wird. Fig. 2 zeigt deutlich die erhebliche Überlappung zwischen den Platten 1d und 1e.

Weiterhin ist die Gleitleiste 9 eingezeichnet, die unter einer entsprechenden Ausnehmung der eigentlichen Tischfläche 10 angeordnet ist und, wenn die Platte 1e in Y-Richtung über die Gleitleiste 9 hinausgefahren ist, angehoben werden kann. In dünnen Linien ist eingezeichnet, dass sie dann ebenfalls die Platte 1d stützt, diese also auf der analog zu dem Querschieber 6 ausgebildeten Oberseite der Gleitleiste 9 gleiten kann.

Die Hub- und Senkbewegung der Gleitleiste 9 erfolgt zum einen über eine Führung an einem um eine Achse 11 schwenkbaren Hebel 12 und zum zweiten angetrieben durch einen Pneumatikzylinder 13.

Die Bewegung des Querschiebers 6 erfolgt durch eine Linearführung 14 und angetrieben durch einen Riemenantrieb 15 mit einem Motorantrieb 16. An der Linearführung 14 sind Stützen 17 angebracht, die durch in Fig. 2 horizontal verlaufende Schlitze 7 in der Tischfläche 10 greifen und den Querschieber 6 halten.

Einer dieser Schlitze ist in Fig. 2 in der Zeichenebene dargestellt. Sie entsprechen den in Fig. 1 mit 7 bezeichneten Strichen.

## Patentansprüche

1. Transporttisch (2) zum Umlenken transportierter Platten (1),
auf den Platten (1a, 1d, 1b) in einer Einfahrtransportebene in einer X-Richtung eingefahren werden können und der einen in einer Schiebertransportebene verfahrbaren Querschieber (6) aufweist, der dazu ausgelegt ist, die Platten (1e) auf dem Transporttisch (2) in einer quer zu der X-Richtung und in der Schiebertransportebene liegenden Y-Richtung zu beschleunigen,
so dass die Platten (1e, 1c) durch den Transporttisch (2) aus der X-Richtung in die Y-Richtung umgelenkt und in der Y-Richtung ausgefahren werden können,
**dadurch gekennzeichnet, dass** der Transporttisch (2) dazu ausgelegt ist, die Platten (1a,1d) in der X-Richtung zunächst in der Einfahrtransportebene einzufahren, die höher als die Schiebertransportebene und der Querschieber (6) angeordnet ist,
die Platten (1 b) dann in die Schiebertransportebene abzusenken
und dann in der Schiebertransportebene durch den Querschieber (6) zu beschleunigen,
und jeweils nachfolgende Platten (1d) in der Einfahrtransportebene noch während des Ausfahrens der vorderen Platten (1e) einzufahren, so dass sich in einer zu der X-Richtung und der Y-Richtung senkrechten Z-Richtung eine Überlappung aufeinanderfolgender Platten (1d, 1e) ergibt.

2. Transporttisch (2) nach Anspruch 1, bei dem der Querschieber (6) eine als Gleitkante für einfahrende Platten (1d) ausgestaltete Oberseite aufweist.

3. Transporttisch (2) nach Anspruch 1 oder 2 mit einem vor einem durch den Querschieber (6) erfassten Fahrbereich angeordneten X-Rollenwerk (4) zum Verzögern der Platten (1) beim Einfahren.

4. Transporttisch (2) nach Anspruch 1, 2 oder 3 mit einem vor einem durch den Querschieber (6) erfassten Fahrbereich angeordneten X-Rollenwerk (4) zum Halten der Platten (1) in der Y-Richtung, um einem unbeabsichtigten Verschieben der Platten (1) durch den Querschieber (6) entgegen zu wirken.

5. Transporttisch (2) nach einem der vorstehenden Ansprüche mit einem hinter einen durch den Querschieber (6) erfassten Fahrbereich angeordneten Y-Rollenwerk (8) zur Unterstützung des Plattentransports beim Ausfahren.

6. Transporttisch (2) nach einem der vorstehenden Ansprüche mit einem hinter einem durch den Querschieber (6) erfassten Fahrbereich angeordneten X-Anschlag (5) für einfahrende Platten (1).

7. Transporttisch (2) nach Anspruch 6, bei dem der X-Anschlag (5) zur Anpassung an verschiedene Plattenformate in der X-Richtung einstellbar ist.

8. Transporttisch (2) nach einem der vorstehenden Ansprüche, der so ausgelegt ist, dass die Platten (1b) jeweils in der X-Richtung ganz in einen durch den Querschieber (6) erfassten Fahrbereich einfahren, bevor der Querschieber (6) die Platten (1e) jeweils in der Y-Richtung beschleunigt.

9. Transporttisch (2) nach einem der vorstehenden Ansprüche, bei dem der Querschieber (6) durch eine Linearführung (14) geführt und über einen Riemenantrieb (15, 16) angetrieben ist.

10. Transporttisch (2) nach einem der vorstehenden Ansprüche mit einer in einer zu der X-Richtung und zu der Y-Richtung senkrechten Z-Richtung heb- und senkbaren Gleitleiste (9), die eine als Gleitkante ausgebildete Oberseite aufweist und mit ihrer Längsrichtung parallel zu der X-Richtung so angeordnet ist, dass sie beim Absenken eingefahrener Platten (1 b) ihrerseits abgesenkt ist, um in der Schiebertransportebene nicht zu stören, und andererseits beim Ausfahren von Platten (1) hinter diesen angehoben werden kann, um eine nachfolgende Platte über der vorderen Platte zu halten und damit eine gegenseitige Beschädigung in X-Richtung verlaufender Kanten der aufeinanderfolgenden Platten zu vermeiden.

11. Transporttisch (2) nach Anspruch 10, bei dem die Gleitleiste (9) über eine Hebelführung (11, 12) geführt und über einen Pneumatikzylinder (13) angetrieben ist.

12. Verfahren zum Umlenken transportierter Platten (1) auf einem Transporttisch (2), bei dem die Platten (1a, 1b) in einer Einfahrtransportebene in einer X-Richtung auf den Transporttisch (2) eingefahren werden,
mit einem in einer Schiebertransportebene verfahrbaren Querschieber (6) in einer zu der X-Richtung quer und in der Schiebertransportebene liegenden Y-Richtung beschleunigt werden,
so dass die Platten (1e, 1c) aus der X-Richtung in die Y-Richtung umgelenkt und in der Y-Richtung ausgefahren werden,
**dadurch gekennzeichnet, dass** die Platten (1a, 1d) in der X-Richtung zunächst in der Einfahrtransportebene eingefahren werden, die höher als die Schiebertransportebene und der Querschieber (6) angeordnet ist,
dann in die Schiebertransportebene abgesenkt werden
und dann in der Schiebertransportebene durch den Querschieber (6) beschleunigt werden,
und jeweils nachfolgende Platten (1d) in der Einfahrtransportebene noch während des Ausfahrens der vorderen Platten (1e) eingefahren werden, so dass sich in einer zu der X-Richtung und der Y-Richtung senkrechten Z-Richtung eine Überlappung aufeinanderfolgender Platten (1d, 1e) ergibt.

## Claims

1. A transport table (2) for deviating transported boards (1),
on which boards (1a, 1d, 1b) can be introduced in an introduction transport plane in an X direction and which comprises a transversal pusher (6) displaceable in a pusher transport plane and adapted to accelerate said boards (1e) on said transport table (2) in an Y direction being transversal to said X direction and in said pusher transport plane,
so that said boards (1e, 1c) can be deviated by said transport table (2) from said X direction into said Y direction and can be driven out in said Y direction,
**characterised in that** said transport table (2) is adapted to introduce said boards (1a, 1d) in said X direction first in said introduction transport plane being arranged above said pusher transport plane and said transverse pusher (6),
then to lower said boards (1b) into said pusher transport plane,
and then to accelerate said boards in said pusher transport plane by said transverse pusher (6),
and introduce respectively succeeding boards (1 d) in said introduction transport plane already during said driving out of said preceding boards (1e) such that an overlap of succeeding boards (1d, 1e) in a Z direction perpendicular to said X direction and said Y direction results.

2. A transport table (2) according to claim 1 in which said transverse pusher (6) presents an upper surface implemented as a sliding edge for boards (1d) being introduced.

3. A transport table (2) according to claim 1 or 2 having an X roll arrangement (4) upstream of a transport region reached by said transverse pusher (6), for decelerating said boards (1) during their introduction.

4. A transport table (2) according to claim 1, 2, or 3 having an X roll arrangement (4) upstream of a transport region reached by said transverse pusher (6), for holding said boards (1) in said Y direction in order to prohibit an inadvertent displacement of said boards (1) by said transverse pusher (6),

5. A transport table (2) according to one of the preceding claims having an Y roll arrangement (4) downstream of a transport region reached by said transverse pusher (6), for assisting the board transport during driving out.

6. A transport table (2) according to one of the preceding claims having an X stop (5) downstream of a transport region reached by said transverse pusher (6), for boards (1) being introduced.

7. A transport table (2) according to claim 6 in which said X stop (5) is adjustable in order to be adapted to various board formats in said X direction.

8. A transport table (2) according to one of the preceding claims being adapted such that said boards (1b) are respectively introduced completely into a transport region reached by said transverse pusher (6) in said X direction before said transverse pusher (6) accelerates said respective boards (1e) in said Y direction.

9. A transport table (2) according to one of the preceding claims in which said transverse pusher (6) is guided by a linear guiding means (14) and driven by a belt drive (15, 16).

10. A transport table (2) according to one of the preceding claims having a slide ledge (9) that can be lifted and lowered in a Z direction perpendicular to said X direction into said Y direction and presents an upper surface implemented as a slide edge and is arranged with its longitudinal direction parallel to said X direction such that it can be lowered itself during lowering of introduced boards (1b) in order not to interfere in said pusher transport plane and, on the other hand, can be lifted during driving out of boards (1) there behind in order to support a succeeding board over the preceding board and thus prohibit a mutual damaging of edges of succeeding boards oriented in said X direction.

11. A transport table (2) according to claim 10 in which said slide ledge (9) is guided by a lever guiding means (11, 12) and is driven by a pneumatic cylinder (13).

12. A method for deviating transported boards (1) on a transport table (2), in which method said boards (1a, 1b) are introduced in an introduction transport plane in an X direction onto said transport table (2),
accelerated by a transversal pusher (6) displaceable in a pusher transport plane in an Y direction being transversal to said X direction and in said pusher transport plane,
so that said boards (1e, 1c) are deviated from said X direction into said Y direction and are driven out in said Y direction,
**characterised in that** said boards (1a, 1d) are introduced in said X direction first in said introduction transport plane being arranged above said pusher transport plane and said transverse pusher (6),
then lowered into said pusher transport plane,
and then are accelerated in said pusher transport plane by said transverse pusher (6),
and respectively succeeding boards (1d) are introduced in said introduction transport plane already during said driving out of said preceding boards (1e) such that an overlap of succeeding boards (1d, 1e) in a Z direction perpendicular to said X direction and said Y direction results.

## Revendications

1. Plate-forme de transport (2) pour la déviation de plaques transportées (1)
sur laquelle des plaques (1a, 1d, 1b) peuvent être introduites dans un sens X dans un plan de transport d'introduction et qui présente un poussoir transversal (6) déplaçable dans un plan de transport de poussoir et qui est conçue pour accélérer les plaques (1e) sur la plate-forme de transport (2) dans un sens Y transversal au sens X et se trouvant dans le plan de transport du poussoir,
de sorte que les plaques (1e, 1c) sont déviées par la plate-forme de transport (2) du sens X vers le sens Y et peuvent être sorties dans le sens Y,
**caractérisé en ce que** la plate-forme de transport (2) est conçue pour introduire les plaques (1a, 1d) dans le sens X d'abord dans le plan de transport d'introduction, qui est disposé plus haut que le plan de transport du poussoir et le poussoir transversal (6),
pour ensuite abaisser les plaques (1b) dans le plan de transport du poussoir,
et puis pour les accélérer dans le plan de transport du poussoir au moyen du poussoir transversal (6),
et pour introduire les plaques suivantes respectives (1d) dans le plan de transport d'introduction pendant que la plaque précédente (1e) sort, de sorte qu'on obtient, dans un sens Z perpendiculaire au sens X et au sens Y, un chevauchement des plaques (1d, 1e) se succédant.

2. Plate-forme de transport (2) selon la revendication 1, dans laquelle le poussoir transversal (6) présente une face supérieure réalisée sous forme d'une arête de glissement pour les plaques entrantes (1d).

3. Plate-forme de transport (2) selon la revendication 1 ou 2, présentant un train de rouleaux X (4) disposé avant une zone de circulation touchée par le poussoir transversal (6) et qui sert à ralentir les plaques (1) à leur introduction.

4. Plate-forme de transport (2) selon la revendication 1 2 ou 3, présentant un train de rouleaux X (4) disposé avant une zone de circulation touchée par le poussoir transversal (6) et qui sert à maintenir les plaques (1) dans le sens Y, afin de contrecarrer un décalage inopiné des plaques (1) par le poussoir transversal (6).

5. Plate-forme de transport (2) selon l'une quelconque des revendications précédentes, présentant un train de rouleaux Y (8) disposé derrière une zone de circulation touchée par le poussoir transversal (6) et qui sert à assister le transport des plaques lors de leur sortie.

6. Plate-forme de transport (2) selon l'une quelconque des revendications précédentes, présentant une butée X (5) disposée derrière une zone de circulation touchée par le poussoir transversal (6) pour les plaques entrantes (1).

7. Plate-forme de transport (2) selon la revendication 6, dans laquelle la butée X (5) est réglable pour l'adapter à différents formats de plaques dans le sens X.

8. Plate-forme de transport (2) selon l'une quelconque des revendications précédentes, qui est conçue de manière à ce que les plaques (1b), dans le sens X, rentrent totalement dans une zone de circulation touchée par le poussoir transversal (6) avant que le poussoir transversal (6) n'accélère respectivement les plaques (1e) dans le sens Y.

9. Plate-forme de transport (2) selon l'une quelconque des revendications précédentes, dans laquelle le poussoir transversal (6) est guidé par un guide linéaire (14) et est entraîné par un entraînement par courroie (15, 16).

10. Plate-forme de transport (2) selon l'une quelconque des revendications précédentes, présentant une barrette de glissement (9) pouvant être levée et abaissée dans un sens Z perpendiculaire au sens X et au sens Y et qui présente une face supérieure réalisée sous la forme d'une arête de glissement et est disposée par son sens longitudinal parallèlement au sens X de manière à ce que, lors de l'abaissement de plaques introduites (1b), elle soit de son côté baissée afin de ne pas gêner dans le plan de transport du poussoir et que, d'autre part, lors de la sortie de plaques (1), elle puisse être levée derrière celles-ci afin de maintenir une plaque suivante au dessus de la plaque qui la précède et d'éviter ainsi une détérioration réciproque des arêtes s'étendant dans le sens X des plaques se succédant.

11. Plate-forme de transport (2) selon la revendication 10, dans laquelle la barrette de glissement (9) est guidée par un guide à levier (11, 12) et est entraînée par un vérin pneumatique (13).

12. Procédé de déviation de plaques transportées (1) sur une plate-forme de transport (2), dans lequel les plaques (1a, 1b) sont introduites dans un plan de transport d'introduction dans un sens X sur la plate-forme de transport (2)
présentant un poussoir transversal (6) déplaçable dans un sens Y se trouvant à la transversale du sens X et dans le plan de transport du poussoir,
de sorte que les plaques (1e, 1c) sont déviées du sens X vers le sens Y et sorties dans le sens Y,
**caractérisé en ce que** les plaques (1a, 1d) sont d'abord introduites dans le sens X dans le plan de transport d'introduction, qui est disposé plus haut que le plan de transport du poussoir et le poussoir transversal (6),
qu'elles sont ensuite abaissées dans le plan de transport du poussoir,
et puis accélérées dans le plan de transport du poussoir au moyen du poussoir transversal (6),
et que les plaques suivantes respectives (1d) sont introduites dans le plan de transport d'introduction pendant .que la plaque précédente (1e) sort, de sorte qu'on obtient, dans un sens Z perpendiculaire au sens X et au sens Y, un chevauchement des plaques (1d, 1e) se succédant.
